# EUROPÄISCHE PATENTSCHRIFT

(11) **EP 1 069 747 B1**
(45) Veröffentlichungstag und Bekanntmachung des Hinweises auf die Patenterteilung: **20.10.2004**
(21) Anmeldenummer: 00112113.6
(22) Anmeldetag: 06.06.2000
(51) Int. Cl.: H04L 29/14, H04L 12/56, H04L 29/06

(54) **Datenübertragung in einem duplizierten Übertragungsnetzwerk**
Data transmission in a duplicated communication network
Transmission de données dans un réseau de communication dupliqué

(30) Priorität: 22.06.1999 DE 19928484
(43) Veröffentlichungstag der Anmeldung: 17.01.2001
(73) Patentinhaber: Tenovis GmbH & Co. KG, 60362 Frankfurt am Main (DE)
(72) Erfinder: Maier, Klaus, 61231 Bad Nauheim (DE)

(56) Entgegenhaltungen:
- EP-A- 1 030 462
- GB-A- 2 299 914
- GERSTEL O ET AL: "Combined WDM and SONET network design" INFOCOM '99. EIGHTEENTH ANNUAL JOINT CONFERENCE OF THE IEEE COMPUTER AND COMMUNICATIONS SOCIETIES. PROCEEDINGS. IEEE NEW YORK, NY, USA 21-25 MARCH 1999, PISCATAWAY, NJ, USA,IEEE, US, 21. März 1999 (1999-03-21), Seiten 734-743, XP010323812 ISBN: 0-7803-5417-6

## Beschreibung

### Stand der Technik

Die Erfindung betrifft ein Verfahren zum Steuern der Datenübertragung in einem duplizierten Übertragungsnetzwerk sowie einen Knoten für ein Übertragungsnetzwerk, der für die Anwendung eines solchen Verfahrens geeignet ist.

Ein solches Verfahren ist aus der Druckschrift EP 1 030 462 A2 mit dem Veröffentlichungsdatum vom 23.08.2000 bekannt.

Übertragungsnetzwerke, die zwei Netze mit identischer Struktur umfassen, sind zur Datenübertragung zwischen Sender-Empfängermodulen mit einem hohen Grad von Störungssicherheit geeignet. Falls in einem der zwei Netze eine Störung auftritt, kann der Übertragungsbetrieb auf das zweite Netz umgeschaltet und so ohne wesentliche Unterbrechung fortgesetzt werden, während das erste Netz repariert werden kann.

Dabei ergibt sich jedoch das Problem, daß diese zwei Netze nicht immer vollständig synchron arbeiten, so daß bei einem Umschalten des gesamten Übertragungsbetriebs die Gefahr von Datenverlusten auch in Übertragungen zwischen Modulen besteht, die von der Störung gar nicht direkt betroffen sind. Dieses Problem kann man umgehen, indem man Verbindungsstrecken zwischen den zwei Netzen vorsieht, über die Daten von einem Netz in das andere übertragen werden, so daß es möglich ist, lediglich einzelne defekte Bereiche des einen Netzes dadurch zu ersetzen, daß die Daten streckenweise über das andere geführt werden.

Dies führt allerdings zu Problemen bei der Weiterleitung von Datenpaketen innerhalb des Netzes. Bei dem eingangs erwähnten Fall, daß bei einer Störung in einem der zwei Netze eines duplizierten Übertragungsnetzwerks der Übertragungsverkehr vollständig auf das andere Netz umgeschaltet wird, ist die Netztopologie, die ein Knoten kennen" muß, um empfangene Datenpakete korrekt weiterzuleiten, immer die gleiche, denn wenn eine der Übertragungsstrekken, über die er normalerweise Datenpakete senden oder empfangen müßte, gestört ist, wird der ganze Knoten außer Betrieb genommen. Bei der partiellen Umschaltung unter Verwendung von Verbindungsstrekken zwischen den Netzen müssen die Knoten in der Lage sein, die mit der zeitweiligen Verwendung einer Verbindungsstrecke zwischen den Netzen verbundene Veränderung der Netztopologie bei der Weiterleitung der Datenpakete zu berücksichtigen.

### Vorteile der Erfindung

Das Problem wird durch ein Verfahren gem. Anspruch 1, und einem Knoten zur Durchführung des Verfahrens gem. Anspruch 7 gelöst.

Durch die Erfindung wird ein Verfahren geschaffen zum Steuern der Datenübertragung in einem duplizierten Übertragungsnetzwerk, das zwei Netze mit identischer Struktur umfaßt und in dem Datenpakete zwischen Sender- und Empfängermodulen übertragen werden, wobei jedes Netz einen oder mehrere Knoten umfaßt, die über Verbindungsstrecken aneinander und an die Module sowie an einen entsprechenden Knoten des jeweils anderen Netzes angeschlossen sind, das eine vollautomatische Umleitung der Datenpakete im Störungsfall ermöglicht.

Zur besseren Unterscheidung werden die Verbindungsstrecken innerhalb eines Netzes als horizontal und die zwischen den Knoten der verschiedenen Netze als vertikal bezeichnet.

Die Erfindung sieht vor, daß jeder Knoten anhand der horizontalen Verbindungsstrecke, über die er ein Datenpaket empfängt, entscheidet, ob er das Datenpaket auf einer horizontalen oder der vertikalen Verbindungsstrecke weiter überträgt.

Zu diesem Zweck kann zum Beispiel jedes Sendermodul eine ihm zugeordnete Adresse in jedes von ihm gesendete Paket einfügen. Wenn eine Verbindungsstrekke zwischen einem Modul und einem Knoten des ersten Netzes gestört ist, so genügt es, daß der entsprechende Knoten des zweiten Netzes die Adresse des betreffenden Moduls kennt, um anhand dieser Adresse die Verbindungsstrecke zu erfassen, über die er ein Paket empfangen hat und so unter den von ihm empfangenen Datenpaketen diejenigen herauszufinden, die von dem betreffenden Modul gesendet sind, und sie an den entsprechenden Knoten des ersten Netzes über die vertikale Verbindungsstrecke weiter zu übertragen. Nachdem diese Pakete den Knoten des ersten Netzes erreicht haben, können sie von dort aus in der gleichen Weise übertragen werden, als wenn die Störung in der horizontalen Verbindungsstrecke zu dem Modul nicht bestünde.

Vorzugsweise wird in einem Knoten, der über eine Prozessoreinheit und eine Schnittstelle zu jeder an den Knoten angeschlossenen Verbindungsstrecke verfügt, die Entscheidung über die Weiterübertragung anhand eines in der Kommunikation zwischen den Schnittstellen und der Prozessoreinheit eingesetzten Protokolls gefällt. Dabei ist vorgesehen, daß die Prozessoreinheit jede Schnittstelle zu einem festen Zeitpunkt innerhalb eines Paketzyklus auffordert, ein eventuell empfangenes Paket an die anderen Schnittstellen zu senden, und daß die an die vertikale Verbindungsstrecke angeschlossene Schnittstelle anhand des Zeitpunkts, an dem die aufgeforderte Schnittstelle antwortet, die Herkunft eines an sie gesendeten Pakets erkennt.

Der Knoten des zweiten Netzes beziehungsweise dessen an die vertikale Verbindungsstrecke angeschlossene Schnittstelle fällt die Entscheidung zweckmäßigerweise anhand eines Verzeichnisses, in dem nicht funktionsfähige horizontale Verbindungsstrekken zu dem entsprechenden Knoten des ersten Netzes identifiziert sind. Pakete von Übertragungsstrekken, die in diesem Verzeichnis identifizierten Übertragungsstrecken entsprechen, werden auf der vertikalen Verbindungsstrecke übertragen.

Die Identifizierung kann dabei auf unterschiedliche Weise erfolgen. Der Eintrag im Verzeichnis kann eine Verbindungsstrecke oder auch ihr zugeordnete Module oder Schnittstellen spezifizieren. Es ist ohne Belang, ob der Eintrag sich auf die gestörte Verbindungsstrecke oder die ihr entsprechende Verbindungsstrecke des anderen Netzes bezieht.

Ein solches Verfahren ist selbstverständlich nicht nur dann praktikabel, wenn eine horizontale Verbingungsstrecke zu dem Modul zwar vorhanden, aber defekt ist, sondern auch dann, wenn ein eventuell nur provisorisch angeschlossenes Modul nur über eine einzige Verbindungsstrecke zu dem Übertragungsnetzwerk verfügt.

Eine Überprüfung der Funktionsfähigkeit der horizontalen Verbindungsstrecken wird zweckmäßigerweise von den an sie angeschlossenen Knoten selbsttätig durchgeführt. Falls ein Knoten dabei eine Funktionsstörung einer horizontalen Verbindungsstrecke erfaßt, überträgt er eine Angabe über diese Verbindungsstrecke, zum Beispiel die Adresse des daran angeschlossenen Moduls, an den entsprechenden Knoten des anderen Netzes, damit dieser einen Eintrag, der diese Verbindungsstrecke identifiziert, in sein Verzeichnis einfügt und anschließend bei der Weiterleitung von Datenpaketen berücksichtigen kann.

Um die Knoten in dieser Weise ansprechen zu können, sind ihnen zweckmäßigerweise Adressen zugeordnet. So ist es möglich, daß ein Knoten die Angabe über die gestörte Verbindungsstrecke angeschlossenen in einem an den entsprechenden Knoten des anderen Netzes adressierten Paket überträgt. So sind zur Durchführung des Verfahrens außer der vertikalen Verbindungsstrecke, auf der die Datenpakete übertragen werden, keine weiteren Verbindungsleitungen mit Sonderfunktion zwischen den zwei Netzen erforderlich.

Für die automatische Erfassung einer gestörten Verbindungsstrecke kann vorgesehen werden, daß auf den Verbindungsstrecken zusätzlich zu den Nutzdatenpaketen Prüfpakete übertragen werden. Der Knoten kann eine Störung in einer Verbindungsstrecke erfassen, wenn er über diese während eines gegebenen Zeitraums kein Prüfpaket empfängt. Die Versendung der Prüfpakete kann beispielsweise automatisch mit einer festen Frequenz erfolgen. Alternativ besteht die Möglichkeit, daß ein Knoten zum Prüfen einer Verbindungsstrecke von einem am anderen Ende der Verbindungsstrecke angeschlossenen Knoten oder Modul ein Prüfpaket anfordert und die Verbindung als gestört erfaßt, wenn dieses Prüfpaket innerhalb eines gegebenen Zeitraums nicht eintrifft.

Weitere Merkmale der Erfindung ergeben sich aus der nachfolgenden Beschreibung in Verbindung mit den Figuren und den Ansprüchen.

### Figuren

- Figur 1: zeigt ein Blockdiagramm eines Übertragungsnetzwerks, in dem das erfindungsgemäße Verfahren anwendbar ist; und
- Figur 2: zeigt ein Blockdiagramm eines Knotens für ein Übertragungsnetzwerk gemäß der Erfindung.

### Beschreibung eines Ausführungsbeispiels

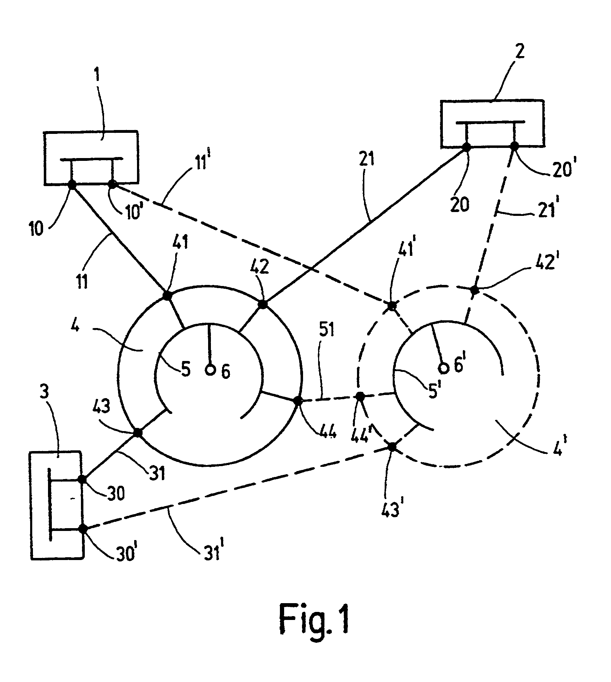

Das in Figur 1 beispielhaft vorgestellte Übertragungsnetzwerk umfaßt zwei Netze mit identischer Struktur, deren Komponenten jeweils durch Bezugszahlen mit und ohne Apostroph (') unterschieden sind. Drei Module 1,2,3 sind zum Senden und Empfangen von Datenpaketen an das Übertragungsnetzwerk angeschlossen, jedes Modul besitzt zwei Schnittstellen 10,10',20,20' beziehungsweise 30,30', die jeweils einem der zwei Netze zugeordnet sind. Diese Schnittstellen sind mit horizontalen Übertragungsstrecken 11,11',21,21',31,31' verbunden, die zu entsprechenden Schnittstellen 41,42,43 beziehungsweise 41',42',43' eines Knotens 4 beziehungsweise 4' führen. Die Schnittstellen sind innerhalb des Knotens an einen internen Bus 5,5' angeschlossen. Jeder Knoten verfügt ferner über einen Prozessor 6,6', der ebenfalls an den Bus angeschlossen ist. Eine vertikale Übertragungsstrecke 51 verläuft zwischen den Knoten über Schnittstellen 44,44'.

Im normalen Betrieb des Übertragungsnetzwerks sendet jedes Modul 1,2,3 ein Datenpaket gleichzeitig über seine beiden Schnittstellen. Wenn das Übertragungsnetzwerk fehlerfrei arbeitet, erreicht daher jedes Datenpaket beide Schnittstellen seines Bestimmungsmoduls. Dieses wertet jedoch nur die von einem seiner zwei Schnittstellen empfangenen Datenpakete aus. Die Schnittstellen, die ausgewertet werden, sind hier die Schnittstellen 10,20,30. Daher wird das Netz, dessen Komponenten Bezugszeichen ohne Apostroph tragen, auch als aktives Netz und das andere als passives Netz bezeichnet.

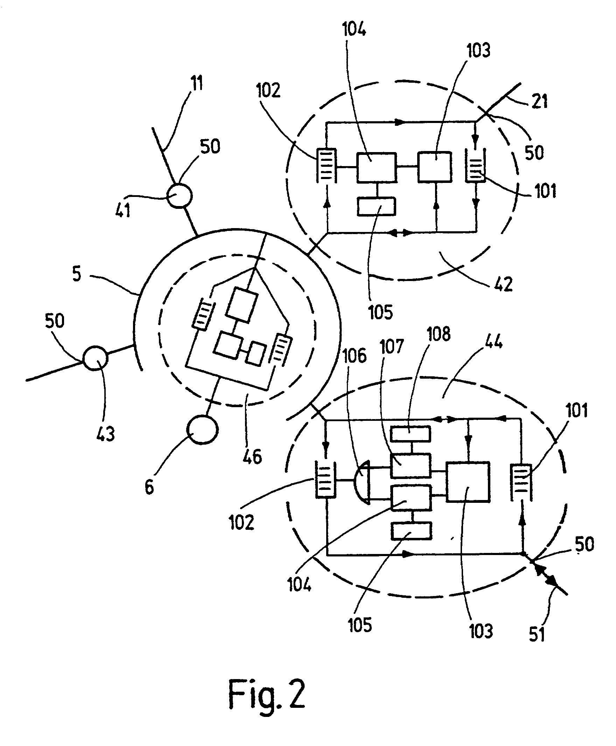

Wenn eine der horizontalen Übertragungsstrecken, zum Beispiel die Übertragungsstrecke 11, unterbrochen ist, führt dies dazu, daß Datenpakete vom Modul 1 nur noch über die Übertragungsstrecke 11' zum Knoten 4' und von dort a priori nur zu den Schnittstellen 20',30' der Module 2 oder 3 übertragen werden, die nicht ausgewertet werden. Um zu gewährleisten, daß Datenpakete vom Modul 1 dennoch die Module 2,3 erreichen, müssen sie über die vertikale Übertragungsstrecke 51 an den Knoten 4 und von dort an die Schnittstellen 20 oder 30 weitergeleitet werden. Wie dies geschieht, wird nun anhand von Figur 2 genauer erläutert, die schematisch die Struktur des Knotens 4 zeigt. Aufbau und Funktionsweise des Knotens 4' ist damit identisch.

Figur 2 zeigt jeweils im Detail den Aufbau der Schnittstellen 42 und 44. Schnittstellen 41 und 43 sowie eine weitere Schnittstelle 46 zwischen dem Prozessor 6 und dem Bus 5 sind jeweils baugleich mit der Schnittstelle 42.

Diese Schnittstelle 42 umfaßt einen Eingangspuffer 101 für von der horizontalen Übertragungsstrecke 21 eintreffende Datenpakete, sowie eine (nicht dargestellte) Steuerschaltung, die den Inhalt des Empfangspuffers 101 unter Vermeidung von Kollisionen auf den Bus 5 ausgibt. Ein Decoder 103 ist an den Bus 5 angeschlossen, um aus Datenpaketen, die die Schnittstelle vom Bus 5 empfängt, eine Empfängeradresse zu extrahieren. Ein Vergleicher 104 vergleicht diese extrahierte Empfängeradresse mit ein oder mehreren Empfängeradressen, die in einem Speicherelement 105 abgelegt sind, und aktiviert einen Sendepuffer 102, so daß dieser das auf dem Bus 5 übertragene Paket aufnimmt, wenn die extrahierte Adresse in dem Speicherelement 105 enthalten ist.

Das Speicherelement 105 enthält ein Verzeichnis der Adressen von sämtlichen Modulen und/oder Knoten, die über die angeschlossene Übertragungsstrecke 21 zu erreichen sind. Auf diese Weise selektiert die Schnittstelle 42 unter sämtlichen auf dem Bus 5 zirkulierenden Paketen diejenigen, die für sie beziehungsweise für an sie mittelbar oder unmittelbar angeschlossene Empfänger bestimmt sind. Speicherelement 105 und Vergleicher 104 können als ein Assoziativspeicherelement organisiert sein.

Die Schnittstelle 44 zwischen dem Bus 5 und der vertikalen Übertragungsstrecke 51 umfaßt zusätzlich zu den oben genannten Komponenten 101 bis 105 jeweils einen zweiten Vergleicher 107 und ein zweites Speicherelement 108 sowie ein logisches Gatter 106. Der zweite Speicher 108 enthält ein Verzeichnis von an den Knoten 4 angeschlossenen Modulen, deren Übertragungsstrecke zum Knoten 4 gestört ist. Der Decoder 103 erfüllt zusätzlich zur Extraktion der Empfängeradresse eines Pakets, das er vom Bus 5 empfängt, auch die Aufgabe, die Übertragungsstrecke zu erfassen, über die das Paket den Knoten 4 erreicht hat. Diese Aufgabe kann auf verschiedenen Wegen erfüllt werden.

Ein erster Weg ist, zusätzlich zur Erfassung der Empfängeradresse auch eine Senderadresse zu erfassen, das heißt eine Adresse, die jedem Sendermodul spezifisch zugeordnet ist und die das Sendermodul in jedes von ihm gesendete Paket einfügt. Diese Senderadresse gibt der Decoder 103 an den zweiten Vergleicher 107 weiter. Das Speicherelement 105 enthält lediglich die Adresse des direkt an die vertikale Übertragungsstrecke 51 angeschlossenen Knotens 4' des anderen Netzes, und das Verzeichnis des Speicherelements 108 ist leer, solange das Übertragungsnetzwerk normal arbeitet. Eine Übertragung von Nutzdatenpaketen, die immer an ein Empfängermodul, nicht aber einen Knoten adressiert sind, findet deshalb bei Normalbetrieb nicht statt.

Die hier jeweils getrennt dargestellten Vergleicher 104,107 und Speicherelemente 105,108 können auch jeweils durch ein Bauelement verkörpert sein, daß im Zeitmultiplex betrieben wird. Das heißt, ein einziger Vergleicher arbeitet nacheinander als Vergleicher 104, indem er eine vom Decoder 103 gelieferte Adresse mit in einem ersten Bereich eines Speicherelements abgelegten Empfängeradressen vergleicht, und dann als Vergleicher 107, indem er den Vergleich mit gespeicherten Senderadressen durchführt, oder in umgekehrter Reihenfolge.

Ein zweiter, alternativer Weg zur Erfassung der Übertragungsstrecke, auf der ein Datenpaket erreicht, basiert auf einem von den Schnittstellen 41, 44 und dem Prozessor verwendeten Kommunikationsprotokoll. Dabei ist vorgesehen, daß die Prozessoreinheit jede Schnittstelle zu einem festen Zeitpunkt innerhalb eines Paketzyklus auffordert, ein eventuell empfangenes Paket an die anderen Schnittstellen zu senden, und die an die vertikale Verbindungsstrecke angeschlossene Schnittstelle anhand des Zeitpunkts, an den die aufgeforderte Schnittstelle antwortet, die Herkunft eines an sie gesendeten Pakets erkennt. Dabei kann die Antwort darin bestehen, daß die angesprochene Schnittstelle in zeitlichem Zusammenhang mit der Aufforderung, zum Beispiel mit einer festgelegten Verzögerung, das empfangene Paket zu senden beginnt. Der Decoder 103 erkennt dann anhand der Zeit des Sendebeginns die sendende Schnittstelle beziehungsweise die zugehörige Übertragungsstrecke. Die Antwort kann auch lediglich aus einer zu einer bestimmten Zeit abgegebenen Ankündigung eines bevorstehenden Sendevorgangs bestehen, in diesem Fall kommt es auf den tatsächlichen Sendezeitpunkt nicht mehr an.

Denkbar ist auch ein interruptgesteuertes Protokoll, bei dem die Schnittstellen aus eigener Initiative und unter Angabe ihrer Identität den Empfang eines Datenpakets von einer Verbindungsstrecke melden und die Schnittstelle 44 diese Meldungen auswertet.

Die Schnittstellen 41 bis 43 und 46 können mit der Schnittstelle 44 jeweils baugleich sein, sie führen allerdings keine Ermittlung der Herkunft von auf dem Bus 5 gesendeten Datenpaketen aus.

Der Prozessor 6 ist in der Lage, über (nicht dargestellte) Steuerleitungen die Speicherelemente 105,108 der einzelnen Schnittstellen zu adressieren und zu beschreiben.

Einer Variante zufolge ist vorgesehen, daß der Prozessor 6 Datenpakete in einem speziellen Format aussendet, die vom Decoder 103 einer adressierten Schnittstelle ausgewertet werden und in die Speicherelemente 105,108 einzutragende Adressen spezifizieren. Das Eintragen dieser Adressen in die Speicherelemente wird dann von der Schnittstelle selbst vorgenommen.

Eine wesentliche Aufgabe des Prozessors 6 ist die fortlaufende Überprüfung der Integrität des Übertragungsnetzwerks. Gemäß einer ersten Alternative sendet der Prozessor 6 zu diesem Zweck regelmäßig Anforderungs-Datenpakete über seine diversen Verbindungsstrecken und wartet für eine vorgegebene Zeitspanne ab, ob ein Prüfpaket auf der betreffenden Datenleitung eintrifft. In gleicher Weise reagiert er, wenn er ein Anforderungspaket enthält, durch Zurücksenden eines Prüfpakets an dessen Absender.

Wenn das angeforderte Prüfpaket während des vorgegebenen Zeitraums nicht eintrifft, erkennt der Prozessor 6 die betreffende Übertragungsstrecke als gestört.

Alternativ kann vorgesehen werden, daß die Module und gegebenenfalls die Knoten des Übertragungsnetzwerks in regelmäßigen Zeitabständen oder zumindest dann, wenn sie während eines vorgegebenen Zeitraums auf einer Übertragungsstrecke kein Nutzdatenpaket gesendet haben, auf dieser Übertragungsstrecke ein Prüfpaket senden. Dann ist ein an diese Übertragungsstrecke angeschlossener Knoten in der Lage, aus dem Nichteintreffen von Datenpaketen über eine bestimmte Übertragungsstrecke die Schlußfolgerung zu ziehen, daß diese gestört ist.

Es wird nun als Beispiel angenommen, daß die Übertragungsstrecke 11 gestört sei. Wenn der Prozessor 6 dies erkennt, adressiert er ein Steuerdatenpaket an den entsprechenden Knoten 4' des anderen Netzes, in dem eine Angabe enthalten ist, die die Übertragungsstrecke 11 identifiziert.

Der Prozessor 6' trägt daraufhin die Angabe über die Verbindungsstrecke 11 in das Speicherelement 108 der Schnittstelle 44' ein, deren Aufbau der gleiche ist, wie oben für die Schnittstelle 44 beschrieben. Von nun an wird jedes Datenpaket, das den Knoten 4' über die Verbindungsstrecke 11' erreicht, von der Schnittstelle 44' erfaßt und auf die vertikale Übertragungsstrecke 51 und somit auf den Bus 5 weitergeleitet. Auf diesem Bus wird es von den Schnittstellen 42,43 in genau der gleichen Weise verarbeitet, wie wenn es direkt vom Modul 1 gekommen wäre, und erreicht so sein Empfängermodul 2 oder 3 über die tatsächlich ausgewertete Schnittstelle 20,30.

Anstelle der hier beschriebenen dezentralen" Struktur eines Knotens, bei der jede Schnittstelle für sich auswertet, ob ein Datenpaket von ihr weitergeleitet werden muß oder nicht, und bei dem somit ein von dem Knoten empfangenes Datenpaket zunächst auf dessen Bus übertragen wird, bevor eine ausgangsseitige Schnittstelle untersucht, ob sie das Paket weiterleiten muß, ist auch eine zentralisierte Struktur denkbar, bei der zum Beispiel ein Prozessor die Empfängeradressen der eintreffenden Pakete direkt dekodiert und die Übertragungsstrekken, über die sie eintreffen, erfaßt und die Pakete entsprechend dem Decodierungsergebnis weiterleitet.

## Patentansprüche

1. Verfahren zum Steuern der Datenübertragung in einem duplizierten Übertragungsnetzwerk, das zwei Netze mit identischer Struktur umfaßt und in dem Datenpakete zwischen Sender-/Empfängermodulen (1,2,3) übertragen werden, wobei jedes Netz einen oder mehrere Knoten (4,4') umfaßt, die über als horizontal bezeichnete Verbindungsstrecken (11,21,31;11',21',31') aneinander und an die Module (1,2,3) angeschlossen sind, und jeder Knoten (4,4') eines der zwei Netze an einen entsprechenden Knoten (4',4) des jeweils anderen Netzes über eine als vertikal bezeichnete Verbindungsstrecke (51) angeschlossen ist, ein Knoten (4,4') anhand der horizontalen Verbindungsstrecke (11,...,31'), über die er ein Datenpaket empfängt, entscheidet, ob er das Datenpaket auf einer horizontalen (11,21,31;11',21',31') oder der vertikalen Verbindungsstrecke (51) weiter überträgt, **dadurch gekennzeichnet, daß** der Knoten (4') die Auswahl anhand eines Verzeichnisses (108) durchführt, in dem nicht funktionsfähige horizontale Verbindungsstrecken zu dem entsprechenden Knoten (4) des anderen Netzes identifiziert sind, und ein Datenpaket auf der vertikalen Verbindungsstrecke (51) überträgt, wenn der horizontalen Verbindungsstrecke, über die er das Paket empfängt, eine der identifizierten Verbindungsstrecken entspricht.

2. Verfahren nach Anspruch 1, bei dem ein Knoten (4) die Funktionsfähigkeit der an ihn angeschlossenen horizontalen Verbindungsstrecken (11,21,31) überprüft, und, wenn er eine Funktionsstörung einer horizontalen Verbindungsstrecke (11) erfaßt, eine Angabe über diese horizontale Verbindungsstrecke (11) an den entsprechenden Knoten (4') des anderen Netzes überträgt, und der entsprechende Knoten (4') einen Eintrag, der die gestörte Verbindungsstrecke (11) identifiziert, in sein Verzeichnis einfügt.

3. Verfahren nach Anspruch 2, bei dem ein Knoten (4) die Angabe über die gestörte Verbindungsstrecke (11) in einem an den entsprechenden Knoten (4') des anderen Netzes adressierten Paket überträgt.

4. Verfahren nach Anspruch 2 oder 3, bei dem auf den Verbindungsstrecken (11,21,31) Prüfpakete übertragen werden und der Knoten (4) eine Verbindungsstrecke (11) als gestört erfaßt, wenn er über die Verbindungsstrecke (11) während eines gegebenen Zeitraums kein Prüfpaket empfängt.

5. Verfahren nach einem der vorhergehenden Ansprüche, bei dem ein Knoten (4) jeweils eine Schnittstelle (41,42,43,44) zu jeder an den Knoten angeschlossenen Verbindungsstrecke hat, und die an die vertikale Verbindungsstrecke (51) angeschlossene Schnittstelle (44) anhand eines zum Senden der Datenpakete innerhalb des Knotens verwendeten Protokolls die Herkunft eines von einer anderen Schnittstelle (41,42,43) an sie gesendeten Pakets erkennt.

6. Verfahren nach Anspruch 5, bei dem eine Prozessoreinheit (6) des Knotens (4) jede Schnittstelle zu einem festgelegten Zeitpunkt eines Paketzyklus auffordert, ein eventuell empfangenes Paket an die anderen Schnittstellen zu senden, und die an die vertikale Verbindungsstrecke (51) angeschlossene Schnittstelle (44) anhand des Zeitpunkts, an dem die aufgeforderte Schnittstelle antwortet, die Herkunft des Pakets erkennt.

7. Knoten (4') für ein Übertragungsnetzwerk zur Durchführung des Verfahrens nach einem der vorhergehenden Ansprüche, mit einer Mehrzahl von Schnittstellen (41',42',43',44') für Verbindungsstrecken, einem Decoder (103) zum Erfassen der Verbindungsstrecke (11'), über die ein Datenpaket vom Knoten (4') empfangen wurde, wenigstens einem Speicherelement (108) zum Aufnehmen von Einträgen über gestörte Verbindungsstrecken (11), wenigstens einem Vergleicher (107) zum Vergleichen der erfaßten Verbindungsstrecke (11) mit in dem Speicherelement (108) gespeicherten Einträgen und Verteilermitteln zum Ausgeben des Pakets an einer bestimmten Schnittstelle (44), wenn der erfaßten Verbindungsstrecke ein Eintrag des Speicherelements (108) entspricht.

8. Knoten nach Anspruch 7, bei dem die Schnittstellen (41',42',43',44') über einen Bus verbunden sind und wenigstens eine Schnittstelle (44') einen Decoder (103), eines der Speicherelemente (108) und einen Vergleicher (107) umfaßt.

9. Knoten nach Anspruch 7 oder 8, bei dem alle Schnittstellen (41',42',43',44') baugleich sind und allein der Vergleicher (107) der bestimmten Schnittstelle (44') Einträge mit erfaßten Verbindungsstrecken vergleicht.

10. Knoten (4') nach einem der Ansprüche 7 bis 9, mit einer Prozessoreinheit (6') zum Auswerten von an sie adressierten Paketen und zum Verändern der in dem Speicherelement (108) gespeicherten Einträgen.

11. Knoten (4) nach einem der Ansprüche 7 bis 10, mit einer Prozessoreinheit (6) zum Überwachen des Eintreffens von Datenpaketen über die Schnittstellen (41,42,43,44) und zum Aussenden eines Steuerdatenpakets, das eine Angabe über eine einer Schnittstelle (41) zugeordnete Übertragungsleitung (11) enthält, wenn während eines gegebenen Zeitraums über die Schnittstelle kein Datenpaket eintrifft.

## Claims

1. A method for controlling the data transfer within a duplicated transfer network comprising two networks of identical structure, and in which data packets are transferred between transmitter/receiver modules (1,2,3), wherein each network comprises one or more nodes (4,4') that are coupled to each other and to the modules (1,2,3) via connecting lines referred to as horizontal connecting lines (11,21,31;11',21',31'), wherein each node (4,4') of one of the two networks is coupled to a respective node (4',4) of the respective other network via a connecting line referred to as a vertical connecting line (51), and wherein a node (4,4') decides from the horizontal connecting line (11,...,31') that it receives a data packet from, if it further transmits the data packet via a horizontal connecting line (11,21,31;11',21',31') or a vertical connecting line (51), **characterised in that**
the node (4') accomplishes the selection by means of a table (108), in which are identified disfunctioning horizontal connecting lines to the respective node (4) of the other network, and transmits a data packet on a vertical connecting line (51), if the horizontal connecting line, via which it receives the packet, corresponds to one of the identified connecting lines.

2. A method according to claim 1, wherein a node (4) checks the functioning of the horizontal connecting lines (11,21,31) coupled to it, and, if it detects a disfunctioning of a horizontal connecting line (11), transmits an indication about this horizontal connecting line (11) to the respective node (4') of the other network, and the respective node (4') inserts an entry that identifies the disfunctioning connecting line (11) into its table.

3. A method according to claim 2, wherein a node (4) transmits the indication about the disfunctioning connecting line (11) in a packet that is addressed to the respective node (4') of the other network.

4. A method according to claim 2 or 3, wherein test packets are transmitted on the connecting lines (11,21,31), and the node (4) records a connecting line (11) as disfunctioning, if it receives via the connecting line (11) no test packet during a given time period.

5. A method according to any of the previous claims, wherein a node (4) has a respective interface (41,42,43,44) at each connecting line coupled to the node, and the interface (44) coupled to the vertical connecting line (51) recognises the origin of a packet sent to it from a different interface (41,42,43) by a protocol that is used within the node for transmitting of the data packets.

6. A method according to claim 5, wherein a processor unit (6) of the node (4) requests each interface at a defined point in time of a packet cycle to transmit a possibly received packet to the other interfaces, and the interface (44) that is coupled to the vertical connecting line (51) recognises the origin of the packet by the point in time when the requested interface answers.

7. A node (4') for a transfer network for carrying out the method of any of the previous claims, comprising a plurality of interfaces (41',42',43',44') for connecting lines, a decoder (103) for identifying the connecting line (11') via which the data packet from the node (4') has been received, at least one memory element (108) for storing entries of disfunctioning connecting lines (11), at least one comparator (107) for comparing the identified connecting line (11) with entries stored in the memory element (108), and distribution means for releasing packets at a determined interface (44), if the identified connecting line matches an entry in the memory element (108).

8. A node according to claim 7, wherein the interfaces (42',42',43',44') are connected via a bus, and at least one interface (44') comprises a decoder (103), one of the memory elements (108), and a comparator (107).

9. A node according to claim 7 or 8, wherein all interfaces (41',42',43',44') are identical in construction and only the comparator (107) of the defined interface (44') compares entries with identified connecting lines.

10. A node (4') according to any of the claims 7 to 9, comprising a processor unit (6') for evaluating of data packets addressed to it, and for modifying the entries stored in the memory element(108)

11. A node (4) according to any of the claims 7 to 10, comprising a processor unit (6) for watching the reception of data packets via the interfaces (41,42,43,44), and for transmitting a test packet that comprises an indication about a transfer line (11) assigned to an interface (41), if no data packet arrives via the interface during a given time period.

## Revendications

1. Procédé pour commander la transmission de données dans un réseau de transmission dupliqué qui comprend deux réseaux de structure identique et dans lequel des paquets de données sont transmis entre des modules émetteurs/récepteurs (1, 2, 3), chaque réseau comprenant un ou plusieurs noeuds (4, 4') qui sont connectés entre eux et aux modules (1, 2, 3) au moyen de voies de liaison dites horizontales (11, 21, 31 ; 11', 21', 31'), et chaque noeud (4, 4') d'un des deux réseaux étant connecté à un noeud correspondant (4', 4) de l'autre réseau par l'intermédiaire d'une voie de liaison (51) dite verticale, un noeud (4, 4') décidant, d'après la voie de liaison horizontale (11, ..., 31') par l'intermédiaire de laquelle il reçoit un paquet de données, s'il retransmet le paquet de données sur une voie de liaison horizontale (11, 21, 31 ; 11', 21', 31') ou sur la voie de liaison verticale (51),
**caractérisé en ce que**
le noeud (4') effectue le choix d'après un répertoire (108) dans lequel sont identifiées des voies de liaison horizontales inaptes au fonctionnement aboutissant au noeud correspondant (4) de l'autre réseau, et transmet un paquet de données sur la voie de liaison verticale (51) lorsqu'à la voie de liaison horizontale par l'intermédiaire de laquelle il reçoit le paquet correspond une des voies de liaison identifiées.

2. Procédé selon la revendication 1,
selon lequel
un noeud (4) vérifie l'aptitude au fonctionnement des voies de liaison horizontales (11, 21, 31) qui y sont connectées et, lorsqu'il détecte une défaillance de fonctionnement d'une voie de liaison horizontale (11), il transmet une indication concernant cette voie de liaison horizontale (11) au noeud correspondant (4') de l'autre réseau et le noeud correspondant (4') ajoute dans son répertoire une inscription qui identifie la voie de liaison défaillante (11).

3. Procédé selon la revendication 2,
selon lequel
un noeud (4) transmet l'indication concernant la voie de liaison (11) défaillante dans un paquet adressé au noeud correspondant (4') de l'autre réseau.

4. Procédé selon la revendication 2 ou 3,
selon lequel
des paquets de contrôle sont transmis sur les voies de liaison (11, 21, 31) et le noeud (4) reconnaît une voie de liaison (11) comme défaillante lorsqu'il ne reçoit aucun paquet de contrôle par l'intermédiaire de la voie de liaison (11) pendant un espace de temps donné.

5. Procédé selon une des revendications précédentes,
selon lequel
un noeud (4) a une interface (41, 42, 43, 44) aboutissant à chacune des voies de liaison connectées au noeud et l'interface (44) connectée à la voie de liaison verticale (51) reconnaît d'après un protocole utilisé à l'intérieur du noeud pour l'envoi des paquets de données à l'intérieur du noeud, la provenance d'un paquet qui lui est envoyé en provenance d'une autre interface (41, 42, 43).

6. Procédé selon la revendication 5,
selon lequel
une unité processeur (6) du noeud (4) requiert de chaque interface, à un instant fixé d'un cycle de paquet, qu'elle envoie un paquet éventuellement reçu aux autres interfaces et l'interface (44) connectée à la voie de liaison verticale (51) reconnaît la provenance du paquet d'après l'instant où l'interface requise répond.

7. Noeud (4') pour un réseau de transmission pour la mise en oeuvre du procédé selon l'une des revendications précédentes, comprenant une pluralité d'interfaces (41', 42', 43', 44') pour des voies de liaison, un décodeur (103) destiné à détecter la voie de liaison (11') par l'intermédiaire de laquelle un paquet de données a été reçu par le noeud (4'), au moins un élément de mémoire (108) destiné à recevoir des inscriptions concernant des voies de liaison défaillantes (11), au moins un comparateur (107) destiné à comparer la voie de liaison (11) détectée avec des inscriptions mémorisées dans l'élément de mémoire (108) et des moyens distributeurs destinés à émettre le paquet à une interface déterminée (44) lorsqu'à la voie de liaison détectée correspond une inscription de l'élément de mémoire (108).

8. Noeud selon la revendication 7,
dans lequel
les interfaces (41', 42', 43', 44') sont connectées par l'intermédiaire d'un bus et au moins une interface (44') comprend un décodeur (103), un des éléments de mémoire (108) et un comparateur (107).

9. Noeud selon la revendication 7 ou 8,
dans lequel
toutes les interfaces (41', 42', 43', 44') sont de même construction et seul le comparateur (107) de l'interface déterminée (44') compare des inscriptions avec des voies de liaison détectées.

10. Noeud (4') selon une des revendications 7 à 9,
comprenant une unité processeur (6') destinée à exploiter des paquets qui lui sont adressés et à modifier les inscriptions mémorisées dans l'élément de mémoire (108).

11. Noeud (4) selon une des revendications 7 à 10, comprenant une unité processeur (6') destinée à surveiller l'arrivée de paquets de données par l'intermédiaire des interfaces (41, 42, 43, 44) et à envoyer un paquet de données de commande qui contient une indication concernant une ligne de transmission (11) associée à une interface (41) lorsque aucun paquet de données n'arrive par l'intermédiaire de l'interface pendant un intervalle de temps donné.
